# EUROPÄISCHE PATENTSCHRIFT

(11) **EP 4 042 036 B1**
(45) Veröffentlichungstag und Bekanntmachung des Hinweises auf die Patenterteilung: **11.03.2026**
(21) Anmeldenummer: 20767716.2
(22) Anmeldetag: 20.08.2020
(51) Int. Cl.: F16F 15/123, F16F 15/14, B60K 6/40

(54) **DREHMOMENTÜBERTRAGUNGSVORRICHTUNG**
TORQUE TRANSMITTING DEVICE
DISPOSITIF DE TRANSMISSION DE COUPLE

(30) Priorität: 10.10.2019 DE 102019127215; 06.11.2019 DE 102019129842
(43) Veröffentlichungstag der Anmeldung: 17.08.2022
(73) Patentinhaber: Schaeffler Technologies AG & Co. KG, 91074 Herzogenaurach (DE)
(72) Erfinder: VÖGTLE, Benjamin, 76137 Karlsruhe (DE); MAIENSCHEIN, Stephan, 76534 Baden-Baden (DE); WAHL, Peter, 76744 Wörth-Maximiliansau (DE); KRAUSE, Thorsten, 77815 Bühl (DE); ECHLE, Daniel, 77694 Kehl (DE); SCHNÄDELBACH, David, 77833 Ottersweier (DE)
(74) Vertreter: Schaeffler Technologies
(86) Internationale Anmeldenummer: PCT/DE2020/100730
(87) Internationale Veröffentlichungsnummer: WO 2021/069010

(56) Entgegenhaltungen:
- EP-A2- 2 600 031
- WO-A1-2020/201331
- DE-A1- 102012 203 611
- DE-A1- 102016 211 943
- DE-A1- 102016 211 945

## Beschreibung

Die Erfindung betrifft eine Drehmomentübertragungsvorrichtung nach dem Oberbegriff von Anspruch 1.

Eine Drehmomentübertragungsvorrichtung ist beispielsweise aus
DE 10 2014 222 644 A1 bekannt. Darin wird eine Drehmomentübertragungsvorrichtung für einen Antriebsstrang eines Kraftfahrzeugs beschrieben. Die Drehmomentübertragungsvorrichtung umfasst eine Eingangsseite zur Verbindung mit einem Verbrennungsmotor als Antriebselement, eine Ausgangsseite zur Verbindung mit einem Abtriebselement, einen Elektromotor mit einem Stator und einem Rotor und einen Drehschwingungsdämpfer zwischen dem Rotor und der Ausgangsseite. Der Drehschwingungsdämpfer umfasst ein Fliehkraftpendel, das radial innerhalb von dem Rotor angeordnet ist.

Als Stand der Technik wird auf die DE 10 2016 211 945 A1, die DE 10 2012 203 611 A1, die DE 10 2016 211 943 A1 und die EP 2 600 031 A2 verwiesen.

Die Aufgabe der vorliegenden Erfindung besteht darin, eine Drehmomentübertragungsvorrichtung zu verbessern. Die Drehschwingungen sollen stärker verringert werden und axialer Bauraum eingespart werden.

Wenigstens eine dieser Aufgaben wird durch eine Drehmomentübertragungsvorrichtung mit den Merkmalen nach Anspruch 1 gelöst. Dadurch kann der Drehschwingungstilger effizienter betrieben und zugleich axialer Bauraum eingespart werden.

Der Antriebsstrang kann in einem Fahrzeug angeordnet sein. Der Antriebsstrang kann ein Hybridantriebsstrang sein. Die Umwandlungseinheit kann das Antriebsdrehmoment bereitstellen. Das Antriebsdrehmoment kann durch ein Antriebselement, insbesondere einen Verbrennungsmotor, bereitgestellt werden. Eine Trennkupplung kann wirksam zwischen dem Antriebselement und dem Elektromotor angeordnet sein. Die Trennkupplung kann als K0-Kupplung ausgeführt sein. Der Elektromotor kann in einer P2-Hybridanordnung betreibbar sein.

Das Abtriebselement kann ein Getriebe, bevorzugt ein Automatikgetriebe, ein Handschaltgetriebe, ein CVT-Getriebe oder ein Doppelkupplungsgetriebe sein.

Der Rotor kann radial innerhalb oder radial außerhalb von dem Stator angeordnet sein. Der Rotor ist hauptsächlich axial überlappend zu dem Stator angeordnet. Der Rotor ist mit einem Rotorträger zur Übertragung des von der Umwandlungseinheit bereitgestellten Antriebsdrehmoments verbunden.

Der Drehschwingungstilger kann wirksam zwischen der Trennkupplung und dem Abtriebselement angeordnet sein. Der Drehschwingungstilger kann ein Festfrequenztilger oder ein drehzahladaptiver Tilger sein. Der Drehschwingungstilger kann wirksam zwischen dem Elektromotor und dem Abtriebselement angeordnet sein. Ein weiterer Drehschwingungstilger kann wirksam zwischen der Trennkupplung und dem Abtriebselement angeordnet sein. Der Drehschwingungstilger kann in einem wenigstens teilweise mit einem Fluid befüllbaren Fluidraum angeordnet sein.

Eine Drehmomentübertragungseinheit kann wirksam zwischen der Trennkupplung und dem Abtriebselement angeordnet sein. Die Drehmomentübertragungseinheit kann ein Gehäuse, das einen Fluidraum begrenzt, aufweisen. Der Drehschwingungstilger kann innerhalb von dem Gehäuse angeordnet sein.

In einer bevorzugten Ausführung der Erfindung ist die Tilgermasse axial beabstandet zu der Umwandlungseinheit angeordnet. Der Drehschwingungstilger kann axial zwischen dem Elektromotor und dem Abtriebselement oder auf der gegenüberliegenden Seite angeordnet sein.

In einer speziellen Ausführung der Erfindung ist ein radial innerer Umfang der Tilgermasse radial innerhalb oder radial außerhalb von einem radial inneren Umfang der Umwandlungseinheit angeordnet. Ein radial innerer Umfang der Tilgermasse kann radial innerhalb oder radial außerhalb von einem radial inneren Umfang des Rotors und/oder des Stators angeordnet sein.

In einer weiteren speziellen Ausführung der Erfindung ist ein radial äußerer Umfang der Tilgermasse radial innerhalb oder radial außerhalb von einem radial äußeren Umfang der Umwandlungseinheit angeordnet. Ein radial äußerer Umfang der Tilgermasse kann radial innerhalb oder radial außerhalb von einem radial äußeren Umfang des Rotors und/oder des Stators angeordnet sein.

In einer bevorzugten Ausführung der Erfindung ist ein radial äußerer Umfang der Tilgermasse radial außerhalb von einem radial inneren Umfang der Umwandlungseinheit angeordnet. Ein radial äußerer Umfang der Tilgermasse kann radial außerhalb von einem radial inneren Umfang des Rotors und/oder des Stators angeordnet sein.

In einer speziellen Ausführung der Erfindung ist ein Masseschwerpunkt der Tilgermasse radial außerhalb von einem radial inneren Umfang der Umwandlungseinheit angeordnet. Ein Masseschwerpunkt der Tilgermasse kann radial außerhalb von einem radial inneren Umfang des Rotors und/oder Stators angeordnet sein.

In einer speziellen Ausführung der Erfindung ist ein Masseschwerpunkt der Tilgermasse radial innerhalb von einem radial äußeren Umfang der Umwandlungseinheit angeordnet. Ein Masseschwerpunkt der Tilgermasse kann radial innerhalb von einem radial äußeren Umfang des Rotors und/oder Stators angeordnet sein.

In einer weiteren speziellen Ausführung der Erfindung ist der Drehschwingungstilger ein Fliehkraftpendel und die Tilgermasse eine Pendelmasse, die an dem als Pendelmassenträger ausgeführten Tilgermassenträger entlang einer Pendelbahn begrenzt auslenkbar aufgenommen ist.

Der Verbrennungsmotor kann Drehschwingungen auslösen. Die Drehschwingungen können wenigstens eine hauptsächliche Anregungsordnung aufweisen, wobei das Fliehkraftpendel auf diese Anregungsordnung ausgelegt ist, um die Drehschwingungen möglichst zu verringern. Ein weiteres Fliehkraftpendel kann, insbesondere wirksam zwischen der Trennkupplung und dem Abtriebselement, angeordnet sein. Das weitere Fliehkraftpendel kann auf eine gleiche oder eine unterschiedliche Anregungsordnung wie das Fliehkraftpendel ausgelegt sein. Das weitere Fliehkraftpendel kann wenigstens eine Pendelmasse aufweisen, die radial überlappend zu oder radial innerhalb von der Umwandlungseinheit angeordnet ist.

Das Fliehkraftpendel kann umfangsseitig wenigstens zwei Pendelmassen aufweisen. Die Pendelmassen können durch Koppelmittel miteinander gekoppelt sein. Die Koppelmittel können eine Kraftkopplung zur Kraftübertragung zwischen den Pendelmassen und/oder eine Bewegungskopplung zur Synchronisierung der Bewegungen der Pendelmassen aufweisen.

Die Pendelmasse kann axial überlappend zu dem Pendelmassenträger angeordnet sein. Die Pendelmasse kann in einem Pendelmassenausschnitt in dem Pendelmassenträger angeordnet sein. Die Pendelmasse kann axial hauptsächlich innerhalb von dem Pendelmassenträger angeordnet sein. Die Pendelmasse kann aus einem ersten Pendelmassenteil und einem mit diesem verbundenen zweiten Pendelmassenteil aufgebaut sein. Das erste Pendelmassenteil kann auf einer ersten axialen Seite des Pendelmassenträgers und das zweite Pendelmassenteil kann auf einer gegenüberliegenden zweiten axialen Seite des Pendelmassenträgers angeordnet sein.

Die Pendelmasse kann über wenigstens ein Lagerelement an dem Pendelmassenträger gelagert aufgenommen sein. Das Lagerelement kann an einem radial äußeren Umfang der Pendelmasse abrollbar sein. Das Lagerelement kann an einem radial äußeren Innenumfang des Pendelmassenausschnitts abrollbar sein.

In einer erfindungsgemäßen Ausführung ist der Drehschwingungstilger innerhalb eines wirksam zwischen dem Elektromotor und dem Abtriebselement angeordneten Drehmomentwandlers angeordnet. Der Drehschwingungstilger kann nasslaufend wenigstens teilweise in einem Fluid betrieben sein.

In einer bevorzugten Ausführung der Erfindung ist innerhalb von dem Drehmomentwandler und radial innerhalb von der Umwandlungseinheit eine Wandlerüberbrückungskupplung und/oder ein Drehschwingungsdämpfer angeordnet. Dadurch kann der Bauraum innerhalb der Umwandlungseinheit genutzt werden.

Weitere Vorteile und vorteilhafte Ausgestaltungen der Erfindung ergeben sich aus der Figurenbeschreibung und den Abbildungen.

### Figurenbeschreibung

Die Erfindung wird im Folgenden unter Bezugnahme auf die Abbildungen ausführlich beschrieben. Es zeigen im Einzelnen:
- Figur 1:: Einen Halbschnitt durch eine Drehmomentübertragungsvorrichtung in einer speziellen Ausführungsform der Erfindung.
- Figur 2:: Eine Seitenansicht einer Drehmomentübertragungsvorrichtung in einer weiteren speziellen Ausführungsform der Erfindung.

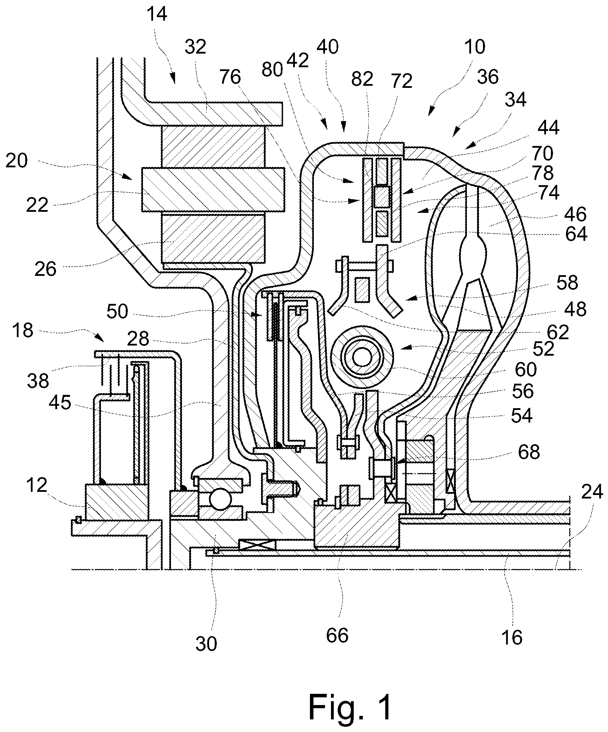

Figur 1 zeigt einen Halbschnitt durch eine Drehmomentübertragungsvorrichtung 10 in einer speziellen Ausführungsform der Erfindung. Die Drehmomentübertragungsvorrichtung 10 ist in einem Antriebsstrang eines Fahrzeugs eingebaut. Der Antriebsstrang ist ein Hybridantriebsstrang, bei dem ein Antriebselement ein Antriebsdrehmoment über eine Antriebswelle 12 bereitstellt. Das Antriebselement ist beispielsweise als Verbrennungsmotor ausgeführt. Weiterhin bewirkt ein Elektromotor 14 ein weiteres Antriebsdrehmoment zur Übertragung an ein Abtriebselement, das eingangsseitig eine Getriebeeingangswelle 16 aufweist. Das Abtriebselement ist bevorzugt ein Getriebe.

Eine Trennkupplung 18 ist wirksam zwischen dem Antriebselement und dem Elektromotor 14 angeordnet. Die Trennkupplung 18 ist eine K0-Kupplung und der Elektromotor 14 ist in einer P2-Hybrid-Anordnung verschaltet. Der Elektromotor 14 umfasst eine zur Umwandlung von elektrischer Energie in mechanische Energie eingerichtete Umwandlungseinheit 20, die einen Stator 22 und einen gegenüber diesem um eine Drehachse 24 drehbaren Rotor 26 aufweist. Der Rotor 26 ist über einen Rotorträger 28 mit einer Eingangswelle 30 verschraubt. Der Stator 22 ist an einem Statorträger 32, der an einem festgelegten Gehäuse angebunden ist, aufgenommen.

Der Trennkupplung 18 ist eine Drehmomentübertragungseinheit 34, die hier als Drehmomentwandler 36 ausgebildet ist, nachgeschaltet. Ein Kupplungsausgang 38 der Trennkupplung 18 ist mit der Eingangswelle 30 drehfest verbunden. Die Eingangswelle 30 ist mit einem Gehäuse 40 der Drehmomentübertragungseinheit 34 fest verbunden. Das Gehäuse 40 ist als Wandlergehäuse 42 ausgeführt und begrenzt einen Fluidraum 44 zur Aufnahme eines Wandlerfluids. Die Drehmomentübertragungseinheit 34 ist über die Eingangswelle 30 an einer Trennwand 45 gelagert aufgenommen. Die Trennwand 45 ist an einem festgelegten Gehäuse angeordnet. Die Trennwand 45 ist axial zwischen und radial überlappend zu der Trennkupplung 18 und der Drehmomentübertragungseinheit 34 angeordnet.

Ein Pumpenrad 46 ist fest mit dem Wandlergehäuse 42 verbunden und bewirkt eine Drehmomentübertragung an ein Turbinenrad 48, das mit der Getriebeeingangswelle 16 verbunden ist. Eine Wandlerüberbrückungskupplung 50 ist parallel zu dem Pumpenrad 46 und dem Turbinenrad 48 geschaltet. Bei geöffneter Wandlerüberbrückungskupplung 50 erfolgt eine Drehmomentübertragung über das Pumpenrad 46 und das Turbinenrad 48 auf das Abtriebselement. Bei geschlossener Wandlerüberbrückungskupplung 50 wird das Antriebsdrehmoment über die Wandlerüberbrückungskupplung 50 auf einen nachgeschalteten Drehschwingungsdämpfer 52 geleitet und von dort an das Abtriebselement.

Der Drehschwingungsdämpfer 52 und die Wandlerüberbrückungskupplung 50 sind radial innerhalb von der Umwandlungseinheit 20 angeordnet. Die Wandlerüberbrückungskupplung 50 ist teilweise axial überlappend zu der Umwandlungseinheit 20 und der Drehschwingungsdämpfer 52 ist axial versetzt zu der Umwandlungseinheit 20 angeordnet.

Ein Dämpfereingangsteil 54 des Drehschwingungsdämpfers 52 ist mit einem Kupplungsausgang 56 der Wandlerüberbrückungskupplung 50 fest verbunden. Ein Dämpferausgangsteil 58 ist über die Wirkung von Federelementen 60, die als Schraubenfedern insbesondere als Druckfedern ausgeführt sind, gegenüber dem Dämpfereingangsteil 54 begrenzt verdrehbar. Das Dämpferausgangsteil 58 ist hier zweiteilig ausgeführt und umfasst ein erstes Dämpferscheibenteil 62 und ein damit fest verbundenes und axial beabstandet angeordnetes zweites Dämpferscheibenteil 64, das wiederum mit einer Abtriebsnabe 66 und dem Turbinenrad 48 über eine Nietverbindung 68 fest verbunden ist.

An dem Dämpferausgangsteil 58, hier an dem zweiten Dämpferscheibenteil 64, ist ein Drehschwingungstilger 70 angeordnet. Der Drehschwingungstilger 70 umfasst einen Tilgermassenträger 72 und wenigstens eine daran entgegen der Wirkung einer Rückstellkraft auslenkbar aufgenommenen Tilgermasse 74. Der Drehschwingungstilger 70 ist hier als Fliehkraftpendel 76 ausgeführt und der Tilgermassenträger 72 bildet einen Pendelmassenträger 78 und die Tilgermasse 74 eine Pendelmasse 80. Die Pendelmasse 80 ist gegenüber dem Pendelmassenträger 78 entgegen der Wirkung der Fliehkraft entlang einer Pendelbahn begrenzt auslenkbar. Dabei ist die Pendelmasse 80 über wenigstens ein Lagerelement 82 an dem Pendelmassenträger 78 gelagert aufgenommen.

Der Pendelmassenträger 78 kann einteilig mit dem Dämpferausgangsteil 58, insbesondere mit dem zweiten Dämpferscheibenteil 64, oder als getrenntes Bauteil ausgeführt sein. Es können wenigstens zwei umfangseitig beabstandet angeordnete Pendelmassen 80 an dem Pendelmassenträger 78 angeordnet sein. Die Pendelmassen 80 sind radial außerhalb von der Wandlerüberbrückungskupplung 50 und von den Federelementen 60 und radial überlappend zu der Umwandlungseinheit 20 angeordnet. Dabei ist die Pendelmasse 80 axial versetzt zu der Umwandlungseinheit 20 angebracht. Ein radial innerer Umfang der Pendelmasse 80 ist radial weiter außen als ein radial innerer Umfang des Rotors 26 und ein radial äußerer Umfang der Pendelmasse 80 ist radial außerhalb von einem radial äußeren Umfang des Stators 22 angeordnet. Dadurch kann das Massenträgheitsmoment der Pendelmasse 80 erhöht und der axial erforderliche Bauraum für das Fliehkraftpendel 76 verringert werden.

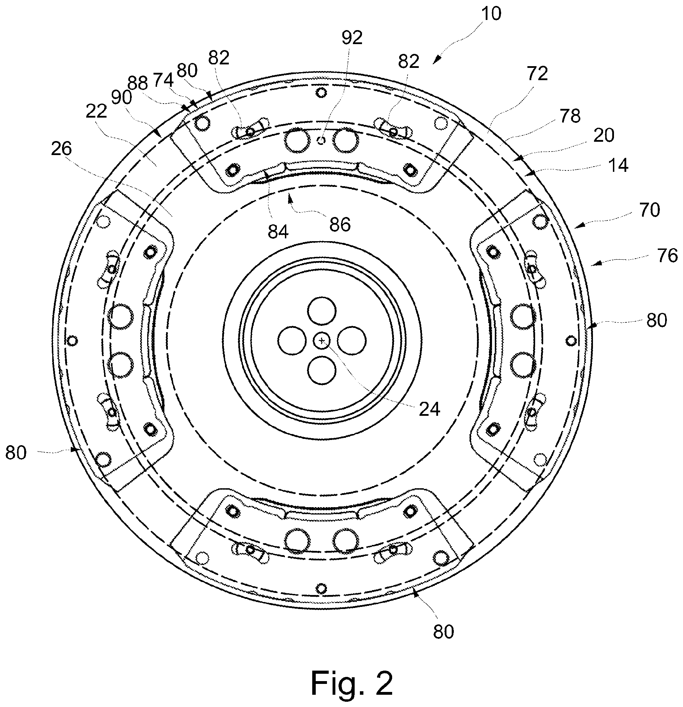

In Figur 2 ist eine Seitenansicht einer Drehmomentübertragungsvorrichtung 10 in einer weiteren speziellen Ausführungsform der Erfindung dargestellt. Die Umwandlungseinheit 20 des Elektromotors 14 ist gestrichelt eingezeichnet. Dabei umfasst die Umwandlungseinheit 20 den um die Drehachse 24 drehbaren Rotor 26 und den festgelegten Stator 22.

Der Drehschwingungstilger 70 ist als Fliehkraftpendel 76 ausgeführt. Die Tilgermasse 74 ist als Pendelmasse 80 und der Tilgermassenträger 72 ist als ein um die Drehachse 24 drehbarer Pendelmassenträger 78 ausgebildet. Es sind insgesamt vier Pendelmassen 80 umfangsseitig angeordnet. Die einzelne Pendelmasse 80 ist über zwei Lagerelemente 82, die hier als Pendelrollen ausgeführt sind, an dem Pendelmassenträger 78 gelagert aufgenommen.

Ein radial innerer Umfang 84 der Pendelmasse 80 ist radial außerhalb von einem radial inneren Umfang 86 der Umwandlungseinheit 20, hier insbesondere von einem radial inneren Umfang des Rotors 26, angeordnet. Ein radial äußerer Umfang 88 der Pendelmasse 80 ist radial außerhalb von einem radial äußeren Umfang 90 der Umwandlungseinheit 20, hier insbesondere von einem radial äußeren Umfang des Stators 22, angeordnet. Der radial äußere Umfang 88 der Pendelmasse 80 ist radial außerhalb von dem radial inneren Umfang 86 der Umwandlungseinheit 20, hier von einem radial inneren Umfang des Rotors 26 und auch von einem radial inneren Umfang des Stators 22 angeordnet. Ein Masseschwerpunkt 92 der Pendelmasse 80 ist radial außerhalb von dem radial inneren Umfang 86 der Umwandlungseinheit 20 und radial innerhalb von dem radial äußeren Umfang 90 der Umwandlungseinheit 20 angeordnet.

### Bezugszeichenliste

- 10: Drehmomentübertragungsvorrichtung
- 12: Antriebswelle
- 14: Elektromotor
- 16: Getriebeeingangswelle
- 18: Trennkupplung
- 20: Umwandlungseinheit
- 22: Stator
- 24: Drehachse
- 26: Rotor
- 28: Rotorträger
- 30: Eingangswelle
- 32: Statorträger
- 34: Drehmomentübertragungseinheit
- 36: Drehmomentwandler
- 38: Kupplungsausgang
- 40: Gehäuse
- 42: Wandlergehäuse
- 44: Fluidraum
- 45: Trennwand
- 46: Pumpenrad
- 48: Turbinenrad
- 50: Wandlerüberbrückungskupplung
- 52: Drehschwingungsdämpfer
- 54: Dämpfereingangsteil
- 56: Kupplungsausgang
- 58: Dämpferausgangsteil
- 60: Federelement
- 62: Dämpferscheibenteil
- 64: Dämpferscheibenteil
- 66: Abtriebsnabe
- 68: Nietverbindung
- 70: Drehschwingungstilger
- 72: Tilgermassenträger
- 74: Tilgermasse
- 76: Fliehkraftpendel
- 78: Pendelmassenträger
- 80: Pendelmasse
- 82: Lagerelement
- 84: innerer Umfang
- 86: innerer Umfang
- 88: äußerer Umfang
- 90: äußerer Umfang
- 92: Masseschwerpunkt

## Patentansprüche

1. Drehmomentübertragungsvorrichtung (10) für einen Antriebsstrang zur Übertragung eines Antriebsdrehmoments zu einem Abtriebselement, aufweisend einen Elektromotor (14) mit einer einen Stator (22) und einen gegenüber diesem drehbaren Rotor (26) umfassenden Umwandlungseinheit (20) zur Umwandlung von elektrischer Energie in mechanische Energie und
einen Drehschwingungstilger (70, 76) mit einer an einem Tilgermassenträger (72, 78) entgegen der Wirkung einer Rückstellkraft begrenzt auslenkbar aufgenommenen Tilgermasse (74, 80),
wobei
die Tilgermasse (74, 80) radial überlappend zu der Umwandlungseinheit (20) angeordnet ist, **dadurch gekennzeichnet, dass** der Drehschwingungstilger (70, 76) innerhalb eines wirksam zwischen dem Elektromotor (14) und dem Abtriebselement angeordneten Drehmomentwandlers (36) angeordnet ist.

2. Drehmomentübertragungsvorrichtung (10) nach Anspruch 1, **dadurch gekennzeichnet, dass** die Tilgermasse (74, 80) axial beabstandet zu der Umwandlungseinheit (20) angeordnet ist.

3. Drehmomentübertragungsvorrichtung (10) nach Anspruch 1 oder 2, **dadurch gekennzeichnet, dass** ein radial innerer Umfang (84) der Tilgermasse (74, 80) radial innerhalb oder radial außerhalb von einem radial inneren Umfang (86) der Umwandlungseinheit (20) angeordnet ist.

4. Drehmomentübertragungsvorrichtung (10) nach einem der vorangehenden Ansprüche, **dadurch gekennzeichnet, dass** ein radial äußerer Umfang (88) der Tilgermasse (74, 80) radial innerhalb oder radial außerhalb von einem radial äußeren Umfang (90) der Umwandlungseinheit (20) angeordnet ist.

5. Drehmomentübertragungsvorrichtung (10) nach einem der vorangehenden Ansprüche, **dadurch gekennzeichnet, dass** ein radial äußerer Umfang (88) der Tilgermasse (74, 80) radial außerhalb von einem radial inneren Umfang (86) der Umwandlungseinheit (20) angeordnet ist.

6. Drehmomentübertragungsvorrichtung (10) nach einem der vorangehenden Ansprüche, **dadurch gekennzeichnet, dass** ein Masseschwerpunkt (92) der Tilgermasse (74, 80) radial außerhalb von einem radial inneren Umfang (86) der Umwandlungseinheit (20) angeordnet ist.

7. Drehmomentübertragungsvorrichtung (10) nach einem der vorangehenden Ansprüche, **dadurch gekennzeichnet, dass** ein Masseschwerpunkt (92) der Tilgermasse (74, 80) radial innerhalb von einem radial äußeren Umfang (90) der Umwandlungseinheit (20) angeordnet ist.

8. Drehmomentübertragungsvorrichtung (10) nach einem der vorangehenden Ansprüche, **dadurch gekennzeichnet, dass** der Drehschwingungstilger (70) ein Fliehkraftpendel (76) und die Tilgermasse (74) eine Pendelmasse (80) ist, die an dem als Pendelmassenträger (78) ausgeführten Tilgermassenträger (72) entlang einer Pendelbahn begrenzt auslenkbar aufgenommen ist.

9. Drehmomentübertragungsvorrichtung (10) nach einem der vorherigen Ansprüche, **dadurch gekennzeichnet, dass** innerhalb von dem Drehmomentwandler (36) und radial innerhalb von der Umwandlungseinheit (20) eine Wandlerüberbrückungskupplung (50) und/oder ein Drehschwingungsdämpfer (52) angeordnet ist.

## Claims

1. A torque transmitting device (10) for a drive train for transmitting a driving torque to an output element, having an electric motor (14) with a conversion unit (20) having a stator (22) and a rotor (26) rotatable relative to the latter for converting electrical energy into mechanical energy, and
a torsional vibration damper (70, 76) with a damper mass (74, 80) accommodated on a damper mass carrier (72, 78) in a manner deflectable to a limited extent against the effect of a restoring force,
wherein
the damper mass (74, 80) is arranged in a radially overlapping manner with respect to the conversion unit (20), **characterized in that** the torsional vibration damper (70, 76) is arranged inside of a torque converter (36) effectively arranged between the electric motor (14) and the output element.

2. The torque transmitting device (10) according to claim 1, **characterized in that** the damper mass (74, 80) is arranged at an axial distance from the conversion unit (20).

3. The torque transmitting device (10) according to claim 1 or 2, **characterized in that** a radially inner circumference (84) of the damper mass (74, 80) is arranged radially inside or radially outside of a radially inner circumference (86) of the conversion unit (20).

4. The torque transmitting device (10) according to any one of the preceding claims, **characterized in that** a radially outer circumference (88) of the damper mass (74, 80) is arranged radially inside or radially outside of a radially outer circumference (90) of the conversion unit (20).

5. The torque transmitting device (10) according to any one of the preceding claims, **characterized in that** a radially outer circumference (88) of the damper mass (74, 80) is arranged radially outside of a radially inner circumference (86) of the conversion unit (20).

6. The torque transmitting device (10) according to any one of the preceding claims, **characterized in that** a centre of mass (92) of the damper mass (74, 80) is arranged radially outside of a radially inner circumference (86) of the conversion unit (20).

7. The torque transmitting device (10) according to any one of the preceding claims, **characterized in that** a centre of mass (92) of the damper mass (74, 80) is arranged radially inside of a radially outer circumference (90) of the conversion unit (20).

8. The torque transmitting device (10) according to any one of the preceding claims, **characterized in that** the torsional vibration damper (70) is a centrifugal pendulum (76) and the damper mass (74) is a pendulum mass (80), which is accommodated on the damper mass carrier (72) designed as a pendulum mass carrier (78) in a manner deflectable to a limited extent along a pendulum path.

9. The torque transmitting device (10) according to any one of the preceding claims, **characterized in that** a torque converter lock-up clutch (50) and/or a torsional vibration damper (52) is arranged inside of the torque converter (36) and radially inside of the conversion unit (20).

## Revendications

1. Dispositif de transmission de couple (10) pour une chaîne cinématique destiné à la transmission d'un couple d'entraînement à un élément de sortie, présentant un moteur électrique (14) comportant une unité de conversion (20) comprenant un stator (22) et un rotor (26) tournant par rapport à celui-ci pour convertir l'énergie électrique en énergie mécanique et
un amortisseur de vibrations torsionnelles (70, 76) comportant une masse d'amortisseur (74, 80) logée de façon à pouvoir être déviée de manière limitée contre l'effet d'une force de rappel sur un support de masse d'amortisseur (72, 78),
dans lequel
la masse d'amortisseur (74, 80) est disposée en chevauchement radial par rapport à l'unité de conversion (20), **caractérisé en ce que** l'amortisseur de vibrations torsionnelles (70, 76) est disposé à l'intérieur d'un convertisseur de couple (36) disposé de manière fonctionnelle entre le moteur électrique (14) et l'élément de sortie.

2. Dispositif de transmission de couple (10) selon la revendication 1, **caractérisé en ce que** la masse d'amortisseur (74, 80) est disposée de manière à être axialement écartée de l'unité de conversion (20).

3. Dispositif de transmission de couple (10) selon la revendication 1 ou 2, **caractérisé en ce qu'**une circonférence (84) intérieure radiale de la masse d'amortisseur (74, 80) est disposée radialement à l'intérieur ou radialement à l'extérieur d'une circonférence (86) intérieure radiale de l'unité de conversion (20).

4. Dispositif de transmission de couple (10) selon l'une quelconque des revendications précédentes, **caractérisé en ce qu'**une circonférence (88) extérieure radiale de la masse d'amortisseur (74, 80) est disposée radialement à l'intérieur ou radialement à l'extérieur d'une circonférence (90) extérieure radiale de l'unité de conversion (20).

5. Dispositif de transmission de couple (10) l'une quelconque des revendications précédentes, **caractérisé en ce qu'**une circonférence (88) extérieure radiale de la masse d'amortisseur (74, 80) est disposée radialement à l'extérieur d'une circonférence (86) intérieure radiale de l'unité de conversion (20).

6. Dispositif de transmission de couple (10) selon l'une quelconque des revendications précédentes, **caractérisé en ce qu'**un centre de gravité (92) de la masse d'amortisseur (74, 80) est disposé radialement à l'extérieur d'une circonférence (86) intérieure radiale de l'unité de conversion (20).

7. Dispositif de transmission de couple (10) selon l'une quelconque des revendications précédentes, **caractérisé en ce que** le centre de gravité (92) de la masse d'amortisseur (74, 80) est disposée radialement à l'intérieur d'une circonférence (90) extérieure radiale de l'unité de conversion (20).

8. Dispositif de transmission de couple (10) selon l'une quelconque des revendications précédentes, **caractérisé en ce que** l'amortisseur de vibrations torsionnelles (70) est un balancier à force centrifuge (76) et la masse d'amortisseur (74) est une masse de balancier (80), laquelle est logée de façon à pouvoir être déviée de manière limitée le long d'une trajectoire de balancier sur le support de masse d'amortisseur (72) conçu sous la forme d'un support de masse de balancier (78).

9. Dispositif de transmission de couple (10) selon l'une quelconque des revendications précédentes, **caractérisé en ce qu'**un embrayage de pontage de convertisseur (50) et/ou un amortisseur de vibrations torsionnelles (52) sont disposés à l'intérieur du convertisseur de couple (36) et radialement à l'intérieur de l'unité de conversion (20).
